# EUROPEAN PATENT APPLICATION

(11) **EP 2 026 477 A1**
(43) Date of publication of application: **18.02.2009**
(21) Application number: 07016010.6
(22) Date of filing: 14.08.2007
(51) Int. Cl.: H04B 7/26

(54) **Radio communication system and method for coding data**

(71) Applicant: Nokia Corporation, 02150 Espoo (FI)
(72) Inventor: The designation of the inventor has not yet been filed
(74) Representative: Bruglachner, Thomas E.

(57) **Abstract**

The invention relates to a radio communication system including multiple base stations being operated synchronously the base stations being provided with antennas for wireless communication with user equipment units, wherein the data transmitted between a base station and a user equipment unit is coded in frames; each frame comprises multiple time slots; the zeroth time slot at the beginning of each frame is dedicated to contain broadcast information to be transmitted downlink from the base station to the user equipment unit; and each packet contains a dedicated uplink physical synchronization channel in a dedicated time slot.

In order to avoid interferences with neigboring base stations, it is proposed that the base stations are configured to transmit the broadcast information at one or more times chosen such that a reception of the broadcast information by a neighbouring base station during said dedicated time slot of at least one data packet is excluded.

## Description

### 1. Technical Field of the Invention

The invention relates to a radio communication system including multiple base stations being operated synchronously according to the preamble of claim 1, and to a method for coding data according to the preamble of claim 16.

### 2. Background of the Invention

The invention is related to Third Generation and long term evolution (LTE) radio communication networks including multiple base stations being operated synchronously. The base stations are provided with one or more antennas each, and are configured to transmit and receive data to and from user equipment units being camped in the range of the respective base station.

It is known that the data transmitted between a base station and the user equipment unit is coded in frames, each frame comprising multiple time slots. Usually, the 0^{th} time slot at the beginning of each frame is dedicated to contain broadcast information to be transmitted downlink from the base station to the user equipment unit. The broadcast information or the broadcast channel (BCH) is a downlink transport channel that is used to broadcast system and cell specific information allowing the user equipment unit to identify the base station transmitting the signal, to synchronize with the base station and to identify possible random access channels (RACH). Examples of such coding schemes are e. g. the LTE alternative frame structure as detailed in the 3GPP specification 36.211 allowing a time division duplex (TDD) communication and the low chip rate time division duplex (LCR TDD) frame structure as defined in the 3GPP specification 25.211.

In the above defined frame structures according to the prior art, the 0^{th} time slot is followed by a sequence including a downlink physical synchronization channel (DwPCH) followed by a guard period and an uplink physical synchronization channel (UpPCH). In the LTE alternative frame structure, the duration of the DwPTS is 2572 chips corresponding to 83.7 µs, the duration of the guard period is 1536 chips corresponding to 50 µs, and the duration of the UpPTS is 4340 chips corresponding to 141,27 µs. In the LCR TDD frame, the duration of the DwPTS is 75 µ, corresponding to 96 chips, the guard period is 75 µs and the UpPTS is 125 µs.

The latter synchronization sequence is interposed between the 0^{th} time slot and the following 1^{st} to 6^{th} time slots being dedicated for containing data to be transmitted. In the LTE alternative frame structure, the above defined time slots and interposed sequence make up one radio frame of 10 ms, whereas in the LCR TDD frame, the above defined sequence of time slots makes up one subframe of 5 ms, one radio frame being composed of two subframes of identical structure.

In each case, the 1^{st} - 6^{th} time slot being dedicated to encode data may be subdivided into groups, the first group the following the synchronization sequence being dedicated to uplink data transmission from the user equipment unit to the base station, and the second group at the end of the frame or subframe being dedicated to downlink data transmission from the base station to the user equipment unit. The groups are separated by a switching point, where the base station switches from reception to transmission, and where the user equipment unit switches from transmission to reception. A further switching point is located between the DwPTS and the UpPTS. The switching between the uplink and downlink transmission direction is implicit to the nature of time division duplex (TDD).

The DwPCH is used to identify the base station and is transmitted at each frame or subframe with an antenna pattern configuration which provides whole cell coverage. Furthermore, it is transmitted by a constant power level which is signaled by higher layers.

A user equipment unit transmitting in the dedicated time slot for uplink physical synchronization UpPCH tries to access the LCR TDD system. Exactly the same channels with slightly different values are used for LTE-TDD. The first time slot following the UpPCH is always dedicated to uplink data transmission.

When switching from uplink to downlink, the base station (NodeB) can only disturb itself if the switching is not performed fast enough. However, switching from downlink to uplink is critical and thus contains per design a guard period accounting for the required switching time of the base station/NodeB for switching from transmit to receive. Nevertheless, the uplink time slot following directly after the switching from downlink to uplink is always the one suffering from most interference. Although the base station/NodeB may be fast enough, the guard period does not account for signals coming from neighbour cells being covered by neighbouring base stations at a larger distance. Even if the base stations are perfectly synchronized, the different run times of the radio signal result in a delayed reception at the user equipment unit. As a consequence, the downlink signals transmitted from neighbour cells may fall into the UpPCH time slot and will mask eventual signals from user equipment units trying to access the cell. Of course, this effect only affects macro deployments where NodeBs have good propagation conditions to each other.

The current guard period of 75 µs allows only a cell range of 1 km in the worst case and 2 km in the best case. The difference between the worst and the best case relates to the propagation conditions of the user equipment unit towards the serving NodeB/base station as the UpPCH is transmitted with timing advance means based on path loss estimate. The user equipment unit tries to estimate the distance from the serving base station. If the user equipment unit is close but in non-LOS condition, path loss will be high and the distance small. Thus, the UpPCH transmitted from the user equipment unit will arrive very early at the NodeB, marking the lower NodeB cell range.

If the guard period would be extended to 750 µs, a cell range of 2 - 10 kilometers would be feasible. However, this is still not attractive when considering the lower boundary.

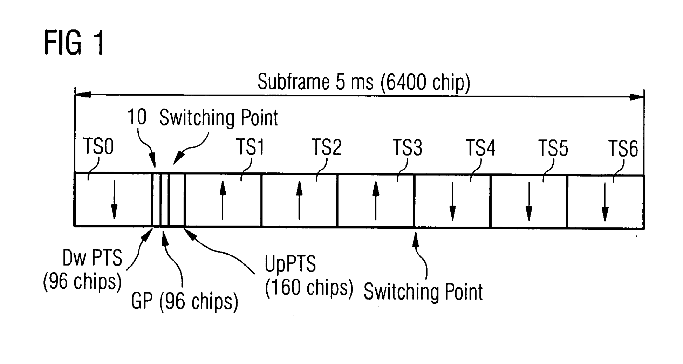

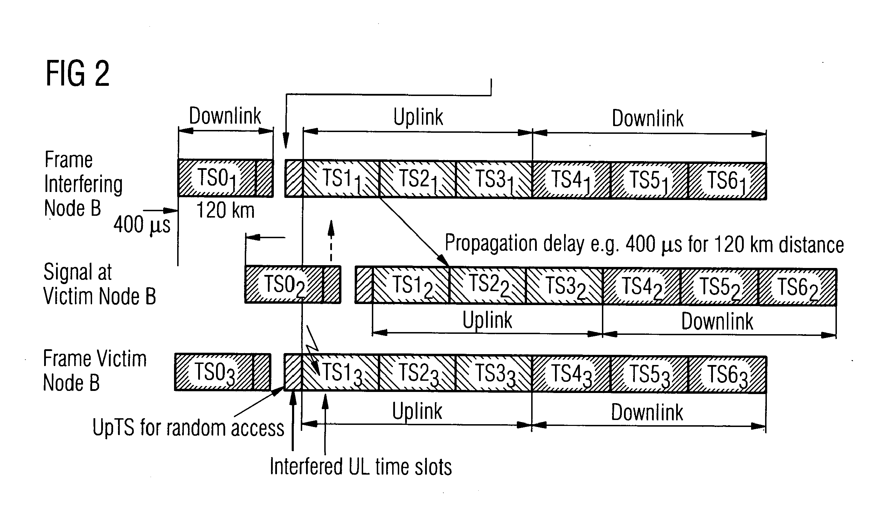

The problem will become more apparent from Figs. 1 and 2. Fig. 1 shows a frame structure according to the prior art and corresponding to a subframe of an LCR TDD frame as defined in the 3GPP specification 25.211. A 0^{th} time slot TS0 is followed by the DwPTS, the guard period and the UpPTS, making up a synchronization sequence 10 including a switching point. The synchronization sequence is followed by 6 time slots TS1 - TS6, wherein in the illustrated example, the first three time slots are dedicated to uplink data transmission, and the last three time slots are dedicated to downlink data transmission, the transmission direction being indicated with arrows pointing upward or downward, respectively.

Fig. 2 illustrates the interference between neighbouring base stations. If e. g. the frame illustrated in the upper part of Fig. 2 is transmitted from an interfering NodeB, it will reach a victim NodeB after a propagation delay of e. g. 400 µs, if the distance between the neighbouring NodeBs/base stations is 120 km. As a consequence, the signal including the broadcast information and being transmitted in the 0^{th} time slot by the interfering NodeB will reach the victim NodeB during the time slot dedicated for the uplink physical synchronization channel. A neighbouring base station being only 22,5 km away, already eats up the complete guard period of 75 µs and starts interfering with the uplink access time slot. In the far field, the line of site (LOS) path loss increases only with 20 dB per decade. Giving that the broadcast information in the 0^{th} time slot and the DwPCH is transmitted with full power only directional, and that the user equipment unit may only reach the base station in the UpPTS close to a minimum value due to higher path loss on shorter distance due to shadowing and less antenna scenario gain, the user equipment unit may not be heard at the base station due to strong multiple interference coming from surrounding base stations disturbing and jamming the UpPTS dedicated time slot, although the user equipment unit may transmit at full power.

### 3. Summary of the Invention

The object of the invention is to avoid the above-defined problems and to provide a radio communication system and a method for coding data wherein a disturbance of the dedicated time slot for uplink physical synchronization due to interference coming from surrounding base stations is avoided.

A first aspect of the invention relates to a radio communication system including multiple base stations being operated synchronously, the base stations being provided with an antennas for wireless communication with user equipment units. The data transmitted between a base station and the user equipment unit is coded in frames, wherein each frame comprises multiple time slots. The 0^{th} time slot at the beginning of each frame is dedicated to contain broadcast information to be transmitted downlink from the base station to the user equipment unit. Each packet contains a dedicated uplink physical synchronization channel in a dedicated time slot, wherein the user equipment unit may access the radio communication system by transmitting in the dedicated time slot. The above described structure of the frame may alternatively be the structure of a subframe, if one frame comprises several subframes of similar or identical structure.

In order to avoid interferences disturbing the uplink physical synchronization channel, it is proposed that the base stations are configured to transmit the broadcast information at one or more times chosen such that the reception of the broadcast information by neighbouring base stations during the dedicated time slot for uplink physical synchronization in at least one data packet is excluded. Due to a properly chosen timing, relation between the transmitting of the broadcast information and opening the channel for uplink physical synchronization, interferences may be avoided even if the base stations are far apart, e. g. more than 100 km. It is noted that avoiding interferences between the 0^{th} time slot comprising the broadcast information and the uplink physical channel is particularly crucible for an undisturbed function of the radio communication system, since the broadcast information is usually transmitted with full power over the whole cell covered by the base station. In radio communication networks of the Third Generation or beyond, the base station may be formed as NodeBs. The invention may in particular be applied in future LTE networks based on LTE TDD and TD-SCDMA, and in particular in systems where one frame comprises both uplink and downlink channels, being combined in a time division duplex (TDD) scheme.

One advantageous possibility for the timing of the dedicated time slot is to configure the base stations such that at least one time slot for data transmission is provided between the 0^{th} time slot and the dedicated time slot for uplink physical synchronization. A time slot for data transmission can be e. g. one of the 1^{gt} - 6^{th} time slots in a frame or subframe with 7 time slots in total of a structure similar to the one illustrated in Fig. 1. In typical frame structures, the time slots for data transmission are long enough to ensure that no interference between neighbouring base stations occurs, even if the base stations are more than 100 km apart. The interference may be avoided or at least strongly reduced, if the end of the 0^{th} time slot and the beginning of the dedicated time slot for uplink physical synchronization are separated by at least 400 µs.

According to a further aspect of the invention, it is proposed that a time slot dedicated for random access channel (RACH) access is a 2^{nd} time slot being separated from the 0^{th} time slot by at least one 1^{st} time slot for data transmission. If the RACH time slot is postponed from the current position at the 1^{st} time slot, the UpPCH may be shifted without having to extend the access procedure to later frames. In other words, besides shifting the UpPTS, it is also suggested to shift the RACH access time slot. As a consequence, the maximum inequality between the number of data time slots dedicated for uplink and downlink data transmission is reduced.

Furthermore, it is proposed that the position of the time slot dedicated for RACH access within the frame is listed in the broadcast information. This opens the possibility to flexibly adapt the position of the RACH access depending on the circumstances, e. g. depending on a required asymmetry between uplink and downlink data transmission.

### 4. Brief description of the drawings

The merits of the invention will become more apparent from the following description of embodiments of the invention, the description being accompanied by the attached drawings. The embodiments combine multiple specific features, the advantages of which will be apparent to the person skilled in the art also in further possible combinations forming further possible embodiments of the invention.
Fig. 1 is a schematic representation of the structure of a subframe including a zeroth time slot for transmitting broadcast information and a dedicated timeslot for uplink synchronization.
Fig. 2 illustrates the interference of a frame transmitted by an interfering base station with uplink time slots of a victim base station.
Fig. 3 is a schematic representation of the structure of a subframe including a zeroth time slot for transmitting broadcast information and a dedicated timeslot for uplink synchronization according to a first embodiment of the invention.
Fig. 4 illustrates the operation of a radio system according to a second embodiment of the invention.

### 5. Detailed description of the embodiments

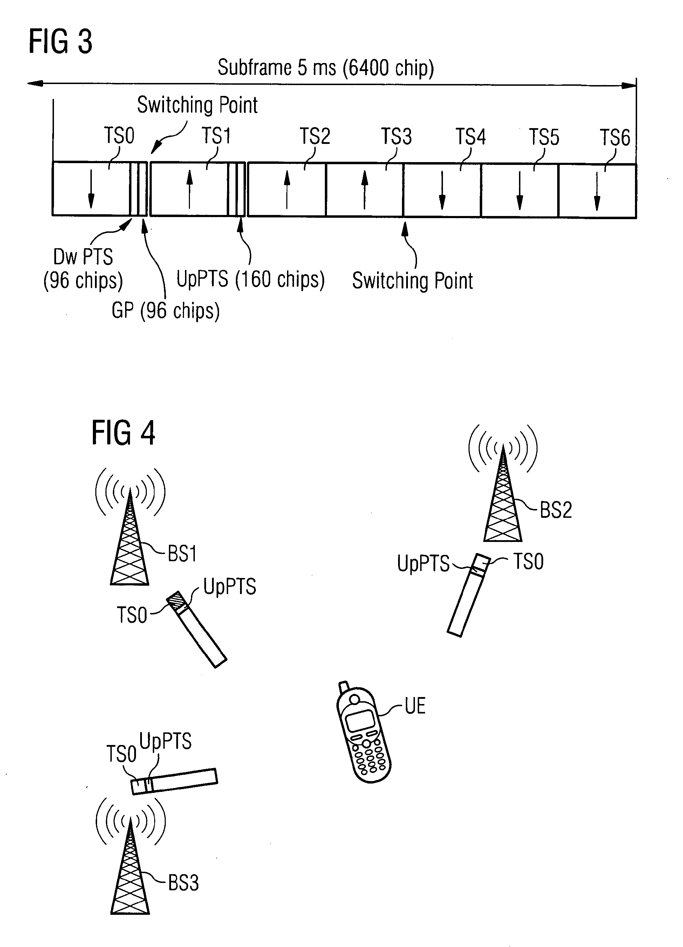

Fig. 3 illustrates a first embodiment of the invention, wherein, in comparison to the structure shown in Fig. 1, the time slot for uplink physical synchronization is shifted behind the first data time slot. The remaining features of the frame structure are similar to the structure illustrated in Fig. 1, such that we refer to the corresponding part of the description in order to avoid repetitions.

The proposed shift of the UpPTS behind the first data time slot may even accelerate the access procedure, because it enables a direct action after the reception of the data in the 0^{th} time slot and the DwPCH, since the broadcast information and the information transmitted in the downlink pilot channel may be decoded during the 1^{st} time slot, which is realistic, whereas decoding the DwPCH during the 50 µs guard period is rather not realistic.

The proposed frame structure according to the above described embodiment of the invention is illustrated in Fig. 3, wherein the 0^{th} time slot used for transmitting the broadcast information is followed by the DwPTS and a guard period including a switching point. The guard period GP is followed by a 1^{st} time slot TS1, which may be used as an ordinary data time slot and which may serve as a guard period in some scenarios, where a first part of it may be corrupted. The data coded in the first time slot TS1 may be coded such that it can be recovered despite a corruption of a first part of the time slot.

As shown in Fig. 3, the 1^{st} time slot is followed by the uplink physical synchronization channel in a dedicated time slot UpPTS, which may also comprise or be followed by a guard period. The time slot TS2 following the UpPTS may be used for RACH attempts and may be fixedly dedicated for uplink data transmission. The following time slots TS3 - TS6 may be used for either uplink or downlink data transmission, wherein the time slots for uplink data transmission should preferably be arranged in the first part of the remaining frame, and wherein the time slots dedicated for downlink data transmission are arranged in the last part of the frame and are separated by a switching point, wherein a guard period may be provided around the switching point.

The frame structure illustrated in Fig. 3 may be the structure of one or more subframes of a duration of e. g. 5 ms or may be the structure of one entire radio frame of e. g. a duration of 10 ms.

Fig. 4 illustrates an alternative embodiment of the invention, where a group of base stations BS1 - BS3 is operated in a coordinated manner, and wherein the base stations BS1 - BS3 are configured to transmit the broadcast information only with a part of the frames. In the example illustrated in Fig. 4, each of the base stations BS1 - BS3 transmits one frame to be received by the user equipment unit, wherein the 0^{th} time slot TS0 is void of any information in the frames submitted by the 2^{nd} and 3^{rd} base station BS2, BS3, whereas the 0^{th} time slot TS0 contains the broadcast information as illustrated with a hedged field in the frame submitted by the 1^{st} base station BS1. The base station selected to transmit the broadcast information is changed periodically after each frame, such that the user equipment (UE) receives a frame containing the broadcast information from the closest base station BS1 with every third transmission signal. The dedicated time slot for the uplink physical synchronization channel UpPTS in the frame received from the closest base station BS1 and containing the broadcast information is unaffected by interferences due to the broadcast information signal transmitted by the neighbouring base stations BS2, BS3. Although the user equipment might not access the communication system using the closest base station BS1 in periods where the broadcast information is contained in frames received from the perturbing base stations BS2, BS3, an unperturbed access is possible once in a period.

Instead of periodically changing the selected base station to transmit the broadcast information, it could in principle be possible to perform a random selection. Moreover, it is possible to provide base stations within a predetermined group of base stations, being configured so as to transmit the broadcast information in alternating frames, such that base stations being nearest neighbours would never transmit the broadcast information in the same frame.

The periodic exchange of the selected base station could be performed in a particularly simple way, if at least one group of the base stations is configured to decide to include the broadcast information in a given frame, depending on the system frame number (SFN) of the frame. A coordination of the discontinuous transmission of the broadcast information (BCH) can be implemented in a particularly simple way, if the group of base stations is configured to perform a modular operation on the system frame number and to include the broadcast information in a frame only if the result of the modular operation corresponds to a predetermined value. This allows a simple definition of classes of base stations, each class corresponding to a particular predetermined value, where the predetermined values are preferably different for different members of the group, belonging to different classes and where the predetermined value assumes all possible values such that none of the thus defined equivalence classes is empty.

The coordination of the base stations may, of course, be fully or partially performed by a central call network unit being configured to perform the coordination such that interferences are avoided. The central call network unit may e. g. define the above defined groups of neighbouring and interfering base stations and define appropriate cyclical changeover procedures allowing access to every base station at least once in a while.

Besides the base station being aware when to broadcast the blank 0^{th} time slot, it is also important for the user equipment UE to align its RACH attempts accordingly, thus corresponding signalling is available in the broadcast information (BCH). The user equipment access should be performed earliest possible after successful decoding of the required BCH information and thus in relation to the system frame number, where the broadcast information of the serving cell is transmitted.

According to an alternative solution, a discontinuous transmission of the broadcast information is performed once within a 10 ms frame structure in a TD-SCDMA scheme frame consisting of two subframes, each having the same structure. Dependent on even or odd system frame number, the 1^{st} or 2^{nd} broadcast channel information transmission opportunity is used only. This approach is favorably used in embodiments, where the base stations/NodeBs are divided in two groups or classes either by a purely mathematical relation of any of parameters relating to the base stations, or by a more position based approach to achieve alternating usage between neighbours, which as a consequence would reduce interference for UpPTS by approximately 3 dB. If the user equipment units would be requested to use both UpPTS opportunities (dedicated time slots) within a subframe, either of them should have good reception conditions. Thus, in the before mentioned case, it is not necessary to clarify to the user equipment unit in which group the actual serving base station is, but rather ensure that it uses two consecutive RACH opportunities within adjacent subframes. This method can, of course, be generalized to coding schemes wherein one frame contains more than two subframes, and to an alternating usage of frames.

All the abovementioned considerations are equally applicable for TD-SCDMA and LTE, giving moderate impact of applying the different solutions for the different TDD modes (LTE mode/TD-SCDMA). It would be even feasible to adopt the discontinuous broadcasting to TD-SCDMA whilst modifying the frame structure of LTE-TDD.

According to a further aspect of the invention, a method for coding data in the above described way is proposed, wherein the broadcast information is coded such that it is transmitted at one or more times chosen such that a reception of the broadcast information by neighbouring base stations during the dedicated time slot or at least one data packet is excluded.

Possible embodiments of the method according to the invention include to separate the 0^{th} time slot and the dedicated time slot for uplink physical synchronizations by at least one time slot for data transmission and to transmit the broadcast information in only a part of the frames, while leaving the 0^{th} time slot of the other frames blank.

Further, the invention proposes to configure base stations for use in radio communication system in the above described type, such that the interference between the reception of uplink physical synchronization data and broadcast information transmitted from neighbouring base stations at a serving base station are avoided.

## Claims

1. Radio communication system including multiple base stations being operated synchronously the base stations being provided with antennas for wireless communication with user equipment units, wherein:
- the data transmitted between a base station and a user equipment unit is coded in frames;
- each frame comprises multiple time slots;
- the zeroth time slot at the beginning of each frame is dedicated to contain broadcast information to be transmitted downlink from the base station to the user equipment unit; and
- each packet contains a dedicated uplink physical synchronization channel in a dedicated time slot,
**characterized in that**
the base stations are configured to transmit the broadcast information at one or more times chosen such that a reception of the broadcast information by a neighbouring base station during said dedicated time slot of at least one data packet is excluded.

2. Radio communication system according to claim 1, **characterized in that** at least one time slot for data transmission is provided between the zeroth time slot and the dedicated time slot for uplink physical synchronization.

3. Radio communication system according to one of the preceding claims, **characterized in that** the end of said zeroth time slot and the beginning of said dedicated time slot are separated by at least 400 µs.

4. Radio communication system according to one of the preceding claims, **characterized in that** a time slot dedicated for RACH access is a second time slot being separated from the zeroth time slot by at least one first data time slot.

5. Radio communication system according to at least one of the preceding claims, **characterized in that** a position of a time slot dedicated for RACH access within the frame is listed in the broadcast information.

6. Radio communication system according to at least one of the preceding claims, **characterized in that** a time slot following said dedicated time slot for uplink physical synchronization is dedicated to uplink data transmission.

7. Radio communication system according to at least one of the preceding claims, **characterized in that** said dedicated timeslot is followed by a guard period.

8. Radio communication system according to at least one of the preceding claims, **characterized in that** at least one of the base stations is configured to transmit the broadcast information in only a part of the frames.

9. Radio communication system according to claim 8, **characterized in that** the base station is configured to randomly select the frames containing the broadcast information.

10. Radio communication system according to claim 8, **characterized in that** the base stations within a predetermined group of base stations are configured to transmit the broadcast information in alternating frames.

11. Radio communication system according to claim 8, **characterized in that** at least one group of the base stations are configured to decide to include the broadcast information in a given frame depending on the system frame number of the frame.

12. Radio communication system according to claim 11, **characterized in that** at least one group of the base stations are configured to perform a modulo operation on the system frame number and to include the broadcast information in the frame if the result of the modulo operation corresponds to a predetermined value.

13. Radio communication system according to claim 11, **characterized in that** at said predetermined value is different for different members of the group of the base stations, wherein the predetermined value assumes all possible values.

14. Radio communication system according at least one of to claims 8 - 13, **characterized in that** signals relating to whether the base station shall include broadcast information are generated by a central core network unit and transmitted to the base station.

15. Base station being configured for use in a radio communication system according to at least one of the preceding claims.

16. Method for coding data to be transmitted between a base station and a user equipment unit of a radio system, wherein
- the data is coded in frames;
- each frame comprises multiple time slots;
- the zeroth time slot at the beginning of each frame is dedicated to contain broadcast information to be transmitted downlink from the base station to the user equipment unit; and
- each packet contains a dedicated uplink physical synchronization channel in a dedicated time slot,
**characterized in that**
the broadcast information is coded such that it is transmited at one or more times chosen such that a reception of the broadcast information by a neighbouring base station during said dedicated time slot of at least one data packet is excluded.

17. Method according to claim 16, **characterized in that** at least one time slot for data transmission is provided between the zeroth time slot and the dedicated time slot for uplink physical synchronization.

18. Method according to claim 16, **characterized in that** the broadcast information is coded such that at least one of the base stations is transmits the broadcast information in only a part of the frames.
